# EUROPÄISCHE PATENTSCHRIFT

(11) **EP 2 964 449 B1**
(45) Veröffentlichungstag und Bekanntmachung des Hinweises auf die Patenterteilung: **30.05.2018**
(21) Anmeldenummer: 14727388.2
(22) Anmeldetag: 27.02.2014
(51) Int. Cl.: B29C 64/153, B22F 3/105, G01N 21/35, G01N 21/17, G01N 21/27

(54) **VERFAHREN UND VORRICHTUNG ZUR QUALITÄTSBEURTEILUNG EINES MITTELS EINES GENERATIVEN LASERSINTER- UND/ODER LASERSCHMELZVERFAHRENS HERGESTELLTEN BAUTEILS**
METHOD AND DEVICE FOR EVALUATING THE QUALITY OF A COMPONENT PRODUCED BY MEANS OF AN ADDITIVE LASER SINTERING AND/OR LASER MELTING METHOD
PROCÉDÉ ET DISPOSITIF POUR ÉVALUER LA QUALITÉ D'UN COMPOSANT FABRIQUÉ AU MOYEN D'UN PROCÉDÉ GÉNÉRATIF DE FRITTAGE AU LASER ET/OU DE FUSION AU LASER

(30) Priorität: 06.03.2013 DE 102013003760
(43) Veröffentlichungstag der Anmeldung: 13.01.2016
(73) Patentinhaber: MTU Aero Engines AG, 80995 München (DE)
(72) Erfinder: HEß, Thomas, 81541 München (DE); ZENZINGER, Günter, 83666 Waakirchen (DE); SATZGER, Wilhelm, 80807 München (DE)
(86) Internationale Anmeldenummer: PCT/DE2014/000078
(87) Internationale Veröffentlichungsnummer: WO 2014/135141

(56) Entgegenhaltungen:
- WO-A1-2007/147221
- WO-A2-2012/019577
- Gibson Ian and Ling Wai Ming: "Low-cost Machine Vision Monitoring of the SLS Process", , Seiten 59-66, XP002727082, Gefunden im Internet: URL:http://utwired.engr.utexas.edu/lff/sym posium/proceedingsArchive/pubs/Manuscripts /1997/1997-08-Gibson.pdf [gefunden am 2014-07-11] & EP 1 466 718 A2 (3D SYSTEMS INC [US]) 13. Oktober 2004 (2004-10-13) in der Anmeldung erwähnt
- RADOVAN HUDÁK ET AL: "MATERIAL AND THERMAL ANALYSIS OF LASER SINTERTED PRODUCTS", ACTA MECHANICA ET AUTOMATICA, Bd. 7, Nr. 1, 1. Januar 2013 (2013-01-01), XP055128301, DOI: 10.2478/ama-2013-0003

## Beschreibung

Die Erfindung betrifft ein Verfahren zur Qualitätsbeurteilung eines mittels eines generativen Lasersinter- und/oder Laserschmelzverfahrens hergestellten Bauteils, insbesondere eines Bauteils für ein Flugzeugtriebwerk. Die Erfindung betrifft weiterhin eine Vorrichtung zur Durchführung eines derartigen Verfahrens.

Generative Lasersinter- oder Laserschmelzverfahren zur Herstellung von Bauteilen, beispielsweise von Bauteilen für Flugzeugtriebwerke, sind als solche beispielsweise bereits aus der DE 10 2004 017 769 B4 bekannt. Beim selektiven Laserschmelzen werden dünne Pulverschichten des oder der verwendeten Werkstoffe auf eine Bauplattform aufgebracht und mit Hilfe eines oder mehrerer Laserstrahlen lokal aufgeschmolzen und verfestigt. Anschließend wird die Bauplattform abgesenkt, eine weitere Pulverschicht aufgebracht und erneut lokal verfestigt. Dieser Zyklus wird solange wiederholt, bis das fertige Bauteil erhalten wird. Das fertige Bauteil kann anschließend bei Bedarf weiterbearbeitet oder sofort verwendet werden. Beim selektiven Lasersintern wird das Bauteil in ähnlicher Weise durch laserunterstütztes Sintern von pulverförmigen Werkstoffen hergestellt. Allerdings werden Lasersinter- und -schmelzverfahren bislang nicht zur Serienproduktion von Bauteilen für Flugzeugtriebwerke verwendet. Insbesondere für den Einsatz hochbelastbarer Bauteile, die durch generative Laserverfahren hergestellt werden, ist zudem eine Prozesszulassung erforderlich, die die Überwachung diverser Prozessparameter wie beispielsweise Laserleistung, Beschaffenheit und Zustand des Werkstoffpulvers und dergleichen voraussetzt. Die einzelnen Prozessparameter müssen dabei im Rahmen einer Prozessüberwachung mit einer jeweils angepassten, aufwändigen Messmethodik in Intervallen überwacht werden. Hierdurch entsteht ein hoher und entsprechend zeit- und kostenintensiver Prüfaufwand. Weiterhin ist eine kontinuierliche Überwachung aller relevanten Prozessparameter häufig von vornherein nicht möglich. Alle Einzelmessungen müssen zudem mit ihren jeweiligen Toleranzbändern abgeglichen werden, wodurch in der Folge zusätzlich ein vergleichsweise hoher Auswerteaufwand entsteht, um Aussagen über die Bauteilqualität des generativ hergestellten Bauteils treffen zu können.

Aus der WO 2012/019577 A2 ist ein Verfahren zum Herstellen eines dreidimensionalen Bauteils durch ein Laserschmelzverfahren bekannt, bei welchem das Bauteil durch aufeinanderfolgendes Verfestigen einzelner Schichten aus durch Einwirkung einer Strahlung verfestigbarem Baumaterial durch Aufschmelzen des Baumaterials erfolgt. Durch ein Visualisierungsverfahren werden beim Bauvorgang im Schmelzepool erfasste Werte dargestellt.

Die Wo 2007/147221 A1 offenbart ein Verfahren zur Überwachung und Kontrolle eines selektiven Laserschmelzverfahrens. Dabei wird ein Signal, das eine Geometrie der Schmelzzone charakterisiert, zur Feedbackkontrolle der Scanparameter des Laserschmelzverfahrens verwendet.

Aus der EP 1 466 718 A2 geht in Verbindung mit der Publikation Gibson, I., Ming, L. W.: "Low-cost Machine Vision Monitoring of the SLS Process", vorgestellt 1997 beim Solid Free-Form Fabrication Symposium, eine Laserschmelzvorrichtung hervor, welche einen InfrarotSensor zur Überwachung der Temperatur der Schmelzzone bei einem Laserschmelzverfahren umfasst.

Aus der Publikation Hudak, R. et al: "Material and thermal analysis of laser sintered products", Acta Mechanica et automatica, Bd. 7, Nr. 1, 1. Januar 2013, ist es bekannt, Bauteile, die durch Lasersintern oder -schmelzen hergestellt wurden, thermisch zu untersuchen, um Stress und Deformationen im fertigen Bauteil vorherzusagen und um Scanparameter des Lasersinter- oder - schmelzverfahrens zu regeln.

Aufgabe der vorliegenden Erfindung ist es, ein Verfahren zur Qualitätsbeurteilung eines mittels eines generativen Lasersinter- und/oder Laserschmelzverfahrens hergestellten Bauteils zu schaffen, welches eine verbesserte Qualitätsbeurteilung des hergestellten Bauteils erlaubt. Eine weitere Aufgabe der Erfindung ist es, eine geeignete Vorrichtung zur Durchführung eines solchen Verfahrens zu schaffen.

Die Aufgaben werden erfindungsgemäß durch ein Verfahren gemäß Anspruch 1 sowie durch eine Vorrichtung gemäß Anspruch 14 gelöst. Vorteilhafte Ausgestaltungen mit zweckmäßigen Weiterbildungen der Erfindung sind in den jeweiligen Unteransprüchen angegeben, wobei vorteilhafte Ausgestaltungen des Verfahrens als vorteilhafte Ausgestaltungen der Vorrichtung und umgekehrt anzusehen sind.

Ein erfindwigsgemäßes Verfahren zur Qualitätsbeurteilung eines mittels eines generativen Lasersinter- und/oder Laserschmelzverfahrens hergestellten Bauteils umfasst zumindest die Schritte Bereitstellen eines ersten Datensatzes, welcher ortsaufgelöste Farbwerte umfasst, die jeweils die Temperatur des Bauteils an einem zugeordneten Bauteilort während des Lasersinterns und/oder Laserschmelzens des Bauteils charakterisieren, Bereitstellen eines zweiten Datensatzes, welcher mit dem ersten Datensatz korrespondierende ortsaufgelöste Farbwerte umfasst, die jeweils die Temperatur eines Referenzbauteils an einem zugeordneten Referenzbauteilort während des Lasersinterns und/oder Laserschmelzens des Referenzbauteils charakterisieren, Ermitteln eines Unterschieds zwischen dem ersten Datensatz und dem zweiten Datensatz und Beurteilen der Qualität des Bauteils anhand des Unterschieds zwischen dem ersten Datensatz und dem zweiten Datensatz. Mit anderen Worten ist es erfindungsgemäß vorgesehen, einen ersten Datensatz bereitzustellen, der zumindest für bestimmte Stellen des Bauteils einen Farbwert enthält, welcher eine Temperatur an dieser Stelle während der Herstellung des Bauteils charakterisiert. Bei dem Bauteil und dem Referenzbauteil, das auch als Meisterteil bezeichnet werden kann, kann es sich beispielsweise um ein Bauteil für ein Flugzeugtriebwerk handeln. Zur Qualitätsbeurteilung werden diese Farbwerte (bzw. Temperaturwerte) beispielsweise im Rahmen einer Bauteilzulassung anhand eines Referenzbauteils erfasst und in einem zweiten Datensatz gespeichert, der dann für die Qualitätsbeurteilung eines analog hergestellten Bauteils bereitgestellt wird. Alle in der Folge produzierten Bauteile können damit einfach und auf Wunsch in Echtzeit überwacht werden, indem die Farbwertverteilung des jeweils hergestellten Bauteils mit den entsprechenden Farbwerten des Meisterteils für die betrachteten Bauteilkoordinaten verglichen werden. Hierdurch werden etwaige Unterschiede zwischen dem zugelassenen Referenzbauteil und dem aktuell hergestellten Bauteil ermittelt und zur Beurteilung der Bauteilqualität herangezogen, so dass eine besonders einfache, schnelle und kostengünstige Qualitätsbeurteilung des lasergesinterten Bauteils ermöglicht wird. Durch eine systematische Erfassung von Schwankungen typischer Prozessgrößen ist es zudem möglich, mit nur einem Datenvergleich Rückschlüsse auf alle relevanten Prozessparameter und -fehler zu ziehen. Die Datensätze können beispielsweise Datentupel der Form [x, y, z, Farbwert] umfassen, wobei x, y und z beispielsweise Bauteilkoordinaten oder Weltkoordinaten eines kartesisches Koordinatensystems sind. Grundsätzlich können auch andere geeignete Datenstrukturen vorgesehen sein. Wenn der erste Datensatz und der zweite Datensatz in unterschiedlichen Datenstrukturen vorliegen, kann zur Ermittlung eines etwaigen Unterschieds zwischen den beiden Datensätzen eine Datentransformation vorgesehen sein. Grundsätzlich kann auch vorgesehen sein, dass der erste und/oder der zweite Datensatz neben Temperaturcharakterisierenden Farbwerten des Bauteils bzw. des Referenzbauteils zusätzliche Messwerte, Metadaten etc. umfasst. Beispielsweise können der erste und/oder der zweite Datensatz zusätzliche Farbwerte umfassen, die die Temperatur außerhalb des Bauteils, beispielsweise Temperaturen innerhalb eines Bauraums, in welchem das Bauteil hergestellt wird, charakterisieren.

In einer vorteilhaften Ausgestaltung der Erfindung ist vorgesehen, dass das Verfahren für wenigstens ein Linienelement des Bauteils und/oder für wenigstens ein Flächenelement des Bauteils und/oder für wenigstens ein Volumenelement des Bauteils und/oder für das gesamte Bauteil durchgeführt wird. Alternativ oder zusätzlich ist es vorgesehen, dass das Verfahren einmal oder mehrmals während des generativen Lasersinterns und/oder Laserschmelzens des Bauteils und/oder im Anschluss an das generative Lasersintern und/oder Laserschmelzen des Bauteils durchgeführt wird. Indem das Verfahren wenigstens einmal während der Herstellung des Bauteils durchgeführt wird, können unzulässige strukturelle Abweichungen vom Referenzbauteil unmittelbar erkannt und in Abhängigkeit der Abweichung bereits während der Herstellung korrigiert werden. Falls bereits während der Herstellung des Bauteils eine unzulässige und irreparable Abweichung ermittelt wird, kann vorteilhaft auf die Fertigstellung des Bauteils verzichtet werden, wodurch unnötige Zeit- und Materialverluste vermieden werden. Der Unterschied zwischen dem Bauteil und dem Referenzbauteil kann dabei grundsätzlich entlang eines Linienelements, das heißt entlang einer Wunschtrajektorie durch das Bauteil, bezüglich eines Flächenelements, das heißt bezüglich einer Schnittebene durch das Bauteil, und/oder für ein Volumenelement des Bauteils ermittelt werden. Die Auswertung kann beispielsweise während des Aufbaus von Klasse 2 oder höherklassigen Bauteilen für Flugzeugtriebwerke schichtweise erfolgen. Bei weniger sicherheitskritischen Bauteilen kann auch eine Auswertung über das gesamte Bauteil ausreichend sein.

In einer weiteren vorteilhaften Ausgestaltung der Erfindung ist vorgesehen, dass anhand des ermittelten Unterschieds wenigstens ein weiterer Parameter aus der Gruppe Pulververschleiß, Pulverzustand, Laserleistung, Gleichmäßigkeit des Pulverauftrags, Schichtstärke, Verfahrweg einer zum Lasersintern und/oder Laserschmelzen verwendeten Bauplattform, Streifenüberlapp, Belichtungsparameter, Übertragbarkeit des Lasersinter- und/oder Laserschmelzverfahrens auf einen Lasersinter- und/oder Laserschmelzanlagentyp, der vom zur Herstellung des Referenzbauteils verwendeten Lasersinter- und/oder Laserschmelzanlagentyp abweicht, Alterungserscheinungen der verwendeten Lasersinter- und/oder Laserschmelzanlage und Maschinendrift der verwendeten Lasersinter- und/oder Laserschmelzanlage bestimmt wird. Hierdurch können vorteilhaft im Rahmen der Qualitätsbeurteilung des Bauteils weitere herstellungsrelevante Informationen ermittelt und bei Bedarf zur Prozessoptimierung verwendet werden.

In einer weiteren vorteilhaften Ausgestaltung der Erfindung ist vorgesehen, dass der erste Datensatz und/oder der zweite Datensatz mindestens 1 Millionen und vorzugsweise mindestens 2 Millionen ortsaufgelöste Farbwerte umfasst. Hierdurch sind statistisch besonders zuverlässige Aussagen ermöglicht. Beispielsweise kann der erste Datensatz und/oder der zweite Datensatz 1,0 Millionen, 1,5 Millionen, 2,0 Millionen, 2,5 Millionen, 3,0 Millionen, 3,5 Millionen, 4,0 Millionen, 4,5 Millionen, 5,0 Millionen, 5,5 Millionen, 6,0 Millionen, 6,5 Millionen, 7,0 Millionen, 7,5 Millionen, 8,0 Millionen, 8,5 Millionen, 9,0 Millionen, 9,5 Millionen, 10,0 Millionen oder mehr ortsaufgelöste Farbwerte umfassen.

Weitere Vorteile ergeben sich, indem der erste Datensatz und/oder der zweite Datensatz aus Messwerten erstellt werden, die mit Hilfe wenigstens eines hochauflösenden Detektors und/oder eines optischen Thermographieverfahrens ermittelt werden. Dies erlaubt eine besonders einfache, präzise und kostengünstige Ermittlung des Energieeintrags und eine entsprechend einfache, präzise und kostengünstige Erstellung des betreffenden Datensatzes. Darüber hinaus kann hierdurch die Qualität des Bauteils besonders präzise ausgewertet werden, da beispielsweise Ungleichmäßigkeiten im Material, in der Schichtdicke oder im Temperatureintrag besonders präzise ermittelbar und in Form eines entsprechenden Datensatzes speicherbar sind.

In einer weiteren vorteilhaften Ausgestaltung der Erfindung ist vorgesehen, dass als Farbwerte für den ersten Datensatz und/oder für den zweiten Datensatz Graustufen verwendet werden. Unter Graustufen werden im Rahmen der Erfindung Abstufungen zwischen reinem Weiß und reinem Schwarz bezeichnet. Da Graustufen Helligkeitswerte repräsentieren, ist hierdurch eine besonders einfache und schnelle Auswertung des entsprechenden Datensatzes und ein entsprechend einfache und schnelle Qualitätsbeurteilung des Bauteils ermöglicht. Grauwerte können im betreffenden Datensatz beispielsweise als Wert zwischen 0 und 255 oder in Hexadezimalschreibweise als Wert zwischen #00 und #FF hinterlegt sein. Grundsätzlich können auch gröbere oder feinere Abstufungen des Grauwerts vorgesehen sein.

Weitere Vorteile ergeben sich, wenn der Unterschied zwischen dem ersten Datensatz und dem zweiten Datensatz mit Hilfe eines Vergleichs zwischen wenigstens einem Histogramm des Bauteils und wenigstens einem korrespondierenden Histogramm des Referenzbauteils und/oder mit Hilfe einer Kreuzkorrelation des ersten und des zweiten Datensatzes und/oder mit Hilfe einer Autokorrelation des ersten Datensatzes und/oder des zweiten Datensatzes ermittelt wird. Alternativ oder zusätzlich ist es vorgesehen, dass der Unterschied zwischen dem ersten Datensatz und dem zweiten Datensatz mit Hilfe einer Zerlegung des ersten und/oder des zweiten Datensatzes in harmonische Komponenten und/oder mit Hilfe einer Ermittlung wenigstens eines Linienschwerpunkts und/oder wenigstens eines Flächenschwerpunkts und/oder eines Volumenschwerpunkts des Bauteils und/oder des Referenzbauteils ermittelt wird. Hierdurch kann das Verfahren optimal an die jeweiligen Gegebenheiten angepasst und entsprechend schnell, einfach und präzise durchgeführt werden. Darüber hinaus ist hierdurch eine einfache Möglichkeit geschaffen, eine spezifische Auswertung der Bauteilqualität in Abhängigkeit davon vorzunehmen, ob unterschiedliche Farb- oder Grauwerte in großen Bereichen einer oder mehrerer aufeinander folgender Schichten des Bauteils auftreten oder ob unterschiedliche Farb- oder Grauwerten in kleineren Bereichen einer oder mehrerer aufeinander folgender Schichten des Bauteils auftreten,

In einer weiteren vorteilhaften Ausgestaltung der Erfindung ist vorgesehen, dass auf einen zu geringen Energieeintrag im Lasersinter- und/oder Laserschmelzprozess und/oder auf eine abfallende Laserleistung und/oder auf eine Verschmutzung eines optischen Systems der Lasersinter- und/oder Laserschmelzanlage geschlossen wird, wenn wenigstens ein Farbwert an einem Bauteilort des Bauteils dunkler als ein Farbwert an einem korrespondierenden Referenzbauteilort des Referenzbauteils ist. Hierdurch sind fundierte Rückschlüsse auf mögliche Herstellungsprobleme und Verfahrensfehler ermöglicht, so dass durch entsprechend korrigierende Eingriffe in den Lasersinter- und/oder Laserschmelzprozess der Anteil an fehlerhaften Bauteilen zumindest signifikant verringert oder sogar vollständig vermieden werden kann.

Dementsprechend ist es in einer weiteren vorteilhaften Ausgestaltung der Erfindung vorgesehen, dass auf einen zu hohen Energieeintrag im Lasersinter- und/oder Laserschmelzprozess und/oder auf eine zu große Laserleistung und/oder auf eine schlechte Wärmeleitung im versinterten Werkstoffpulver geschlossen wird, wenn wenigstens ein Farbwert an einem Bauteilort des Bauteils heller als ein Farbwert an einem korrespondierenden Referenzbauteilort des Referenzbauteils ist. Alternativ oder zusätzlich ist es vorgesehen, dass auf einen falschen Werkstoff und/oder auf einen verunreinigten Werkstoff und/oder auf einen gealterten Werkstoff geschlossen wird, wenn wenigstens ein Farbwert an einem Bauteilort des Bauteils heller als ein Farbwert an einem korrespondierenden Referenzbauteilort des Referenzbauteils ist.

In einer weiteren vorteilhaften Ausgestaltung der Erfindung ist vorgesehen, dass das Bauteil als zulässig klassifiziert wird, wenn der ermittelte Unterschied innerhalb vorgegebener Grenzen liegt, oder dass das Bauteil als unzulässig klassifiziert wird, wenn der ermittelte Unterschied die vorgegebenen Grenzen überschreitet. Auf diese Weise kann besonders einfach zwischen tauglichen bzw. zulässigen Bauteilen und fehlerhaften Bauteilen unterschieden werden.

Ein zweiter Aspekt der Erfindung betrifft eine Vorrichtung zur Durchführung eines Verfahrens nach einem der vorhergehenden Ausführungsbeispiele. Die erfindungsgemäße Vorrichtung umfasst dabei zumindest eine generative Lasersinter- und/oder Laserschmelzanlage zum Herstellen eines Bauteils, insbesondere eines Bauteils für ein Flugzeugtriebwerk, eine Detektionseimichtung, welche ausgebildet ist, ortsaufgelöste Farbwerte zu erfassen, die jeweils die Temperatur des Bauteils an einem zugeordneten Bauteilort während des Lasersinterns und/oder Laserschmelzens des Bauteils charakterisieren, und eine Recheneinrichtung. Die Recheneinrichtung ist dabei ausgebildet, einen ersten Datensatz aus den ortsaufgelösten Farbwerten zu erzeugen und einen zweiten Datensatz bereitzustellen, wobei der zweite Datensatz mit dem ersten Datensatz korrespondierende ortsaufgelöste Farbwerte umfasst, die jeweils die Temperatur eines Referenzbauteils an einem zugeordneten Referenzbauteilort während des Lasersinterns und/oder Laserschmelzens des Referenzbauteils charakterisieren. Weiterhin ist die Recheneinrichtung ausgebildet, um einen Unterschied zwischen dem ersten Datensatz und dem zweiten Datensatz zu ermitteln und zumindest die Qualität des Bauteils anhand des Unterschieds zwischen dem ersten Datensatz und dem zweiten Datensatz zu beurteilen. Hierdurch ist eine besonders schnelle, einfache und detaillierte Kontrolle und Beurteilung der Fertigungsqualität des Bauteils ermöglicht. Weitere sich ergebende Vorteile sind den vorhergehenden Beschreibungen des ersten Erfindungsaspekts zu entnehmen, wobei vorteilhafte Ausgestaltungen des ersten Erfindungsaspekts als vorteilhafte Ausgestaltungen des zweiten Erfindungsaspekts und umgekehrt anzusehen sind.

In einer vorteilhaften Ausgestaltung der Erfindung ist vorgesehen, dass die Detektionseinrichtung wenigstens einen hochauflösenden Detektor und/oder wenigstens einen IR-sensitiven Detektor, insbesondere eine CMOS- und/oder sCMOS- und/oder CCD-Kamera zum Erfassen von IR-Strahlung umfasst. Detektoren bzw. Kameras der genannten Bauarten sind in der Lage, die meisten erhältlichen CCD-Bildsensoren zu ersetzen. Im Vergleich zu den bisherigen Generationen von CCD-basierten Sensoren bzw. Kameras bieten Kameras auf Basis von CMOS und sCMOS-Sensoren verschiedene Vorteile wie beispielsweise ein sehr niedriges Ausleserauschen, eine hohe Bildrate, einen großen Dynamikbereich, eine hohe Quanteneffizienz, eine hohe Auflösung sowie eine große Sensorfläche. Dies ermöglicht nach dem Erstellen des Datensatzes in der Folge eine besonders gute Qualitätsprüfung des hergestellten Bauteils.

Weitere Merkmale der Erfindung ergeben sich aus den Ansprüchen, den Ausführungsbeispielen sowie anhand der Zeichnungen. Dabei zeigt:
- Fig. 1: eine thermographische Aufsicht einer generativ hergestellten Schicht eines Bauteils, welche Bereiche mit unterschiedlichen Temperaturen aufweist;
- Fig. 2: eine schematische Aufsicht mehrerer generativ hergestellter Bauteile mit unterschiedlichen Temperaturverteilungen;
- Fig. 3: eine schematische Perspektivansicht eines Bauteils, bei welchem eine Qualitätsbeurteilung innerhalb eines Volumenelements durchgeführt wird;
- Fig. 4: ein Histogramm eines Referenzbauteils;
- Fig. 5: eine Überlagerung eines Histogramms eines Bauteils mit einem korrespondierenden Histogramm des Referenzbauteils;
- Fig. 6: eine schematisch angedeutete Schar von Histogrammen des Referenzbauteils; und
- Fig. 7: ein schematischer Vergleich zwischen einem Histogramm des Referenzbauteils und einem zugeordneten Histogramm eines Bauteils zur Qualitätsbeurteilung des Bauteils.

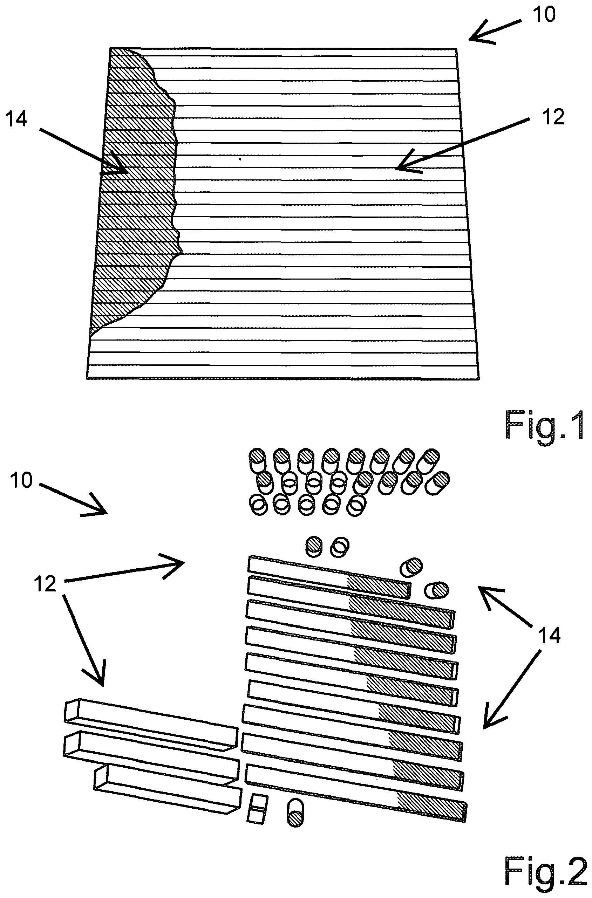

Fig. 1 zeigt eine thermographische Aufsicht einer Schicht eines Bauteils 10 für ein Flugzeugtriebwerk, wobei das Bauteil 10 mit Hilfe eines an sich bekannten generativen Lasersinter- oder Laserschweißverfahrens aus einem entsprechenden Werkstoffpulver hergestellt wird. Man erkennt einerseits einen großflächigen Bereich 12, der eine gleichmäßige Temperaturverteilung aufweist, und andererseits einen kleineren Bereich 14, der im Vergleich zum Bereich 12 eine niedrigere Temperatur aufweist. Die Querstreifen des Bereichs 12 symbolisieren zusätzlich eine Beschichtungsrichtung während der generativen Herstellung des Bauteils 10. Die Temperaturen werden dabei anhand von ortsaufgelösten Grauwerten charakterisiert, so dass der Bereich 14 dunkler als der Bereich 12 erscheint. Die Temperaturwerte können beispielsweise durch thermographische Verfahren ermittelt und für jede gemessene Bauteilkoordinate in einem ersten Datensatz zusammengefasst werden. Die Anzahl der Datenpunkte kann dabei in Abhängigkeit des jeweiligen Herstellungsverfahrens und/oder Bauteils optimal eingestellt werden.

Ursache für die niedrigeren Temperaturen im Bereich 14 ist vorliegend ein mangelhafter Pulverauftrag. Der zu geringe Pulverauftrag im Bereich 14 führt zu einer entsprechend schnelleren Wärmeabstrahlung und zu entsprechend geringeren Oberflächentemperaturen, die durch niedrigere Grauwerte charakterisiert werden. Weitere Ursachen können ein zu geringer Energieeintrag im Bereich 14, beispielsweise aufgrund einer abfallenden Laserleistung, einer Verschmutzung von Umlenkspiegeln des optischen Systems oder dergleichen sein. Umgekehrt kann auf einen zu hohen Energieeintrag im Lasersinter- und/oder Laserschmelzprozess, auf eine zu große Laserleistung, auf eine schlechte Wärmeleitung im versinterten Werkstoffpulver, auf einen falschen Werkstoff, auf einen verunreinigten Werkstoff und/oder auf einen gealterten Werkstoff geschlossen werden, wenn Farb- bzw. Grauwerte in einem Bauteilbereich deutlich heller sind als in anderen Bauteilbereichen.

Fig. 2 zeigt eine schematische Aufsicht mehrerer gemeinsam generativ hergestellter Bauteile 10 mit unterschiedlichen Temperaturverteilungen. Man erkennt wiederum verschiedene hellere Bereiche 12, die dementsprechend vergleichsweise höhere Temperaturen aufweisen, sowie verschiedene dunklere Bereiche 14, die dementsprechend vergleichsweise niedrigere Temperaturen aufweisen. Ursache für die unterschiedliche Temperaturverteilung ist im vorliegenden Beispiel eine von oben nach unten verlaufende Gasströmung im Bauraum einer zur Herstellung der Bauteile 10 verwendeten Lasersinteranlage, welche lokal zu einem höheren Kühleffekt und damit zu einer Häufung vergleichsweise kälterer Bauteilbereiche 14 führt.

Um eine zuverlässige Qualitätsbeurteilung vornehmen zu können und um beispielsweise zuverlässig entscheiden zu können, ob die Bereiche 12 zu hell oder die Bereiche 14 zu dunkel sind, wird der erste Datensatz des oder der Bauteile 10 mit einem zweiten, korrespondierenden Datensatz eines Referenzbauteils oder Meisterstücks verglichen.

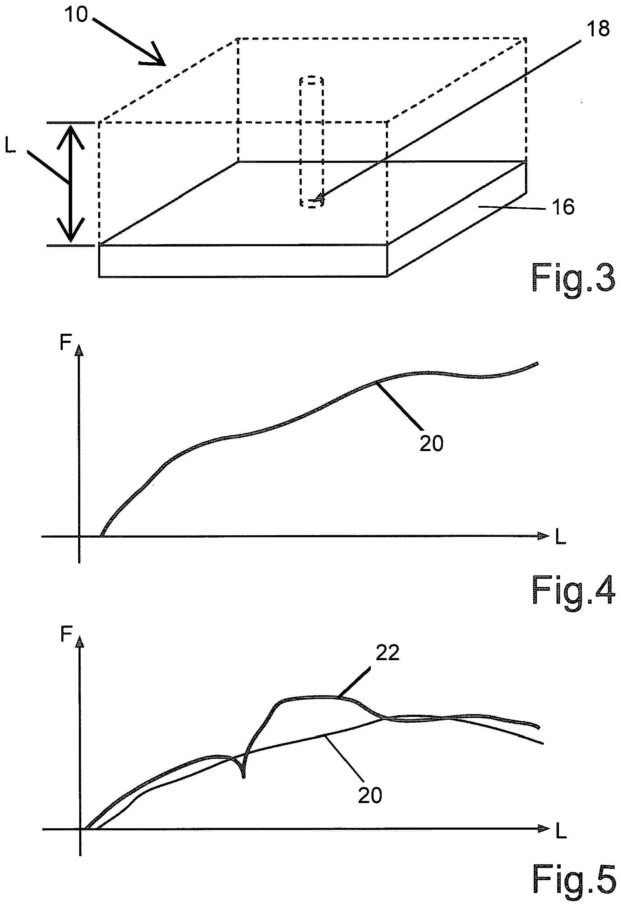

Fig. 3 zeigt hierzu schematisch eine Perspektivansicht eines Bauteils 10, welches auf einer Bauplattform 16 generativ hergestellt wurde. Die Qualitätsbeurteilung des Bauteils 10, welches vereinfachend quaderförmig dargestellt ist und die Kantenlänge L besitzt, wird lokal innerhalb eines Volumenelements 18 des Bauteils 10 durchgeführt. Hierzu wird ein erster Datensatz bereitgestellt, welcher ortsaufgelöste Farb- bzw. Grauwerte umfasst, die jeweils die Temperatur des Bauteils 10 an einem zugeordneten Bauteilort innerhalb des Volumenelements 18 während des Lasersinterns charakterisieren. Weiterhin wird ein zweiter Datensatz bereitgestellt, welcher ebenfalls ortsaufgelöste Farb- bzw. Grauwerte umfasst, die jeweils die Temperatur eines Referenzbauteils innerhalb eines entsprechenden Volumenelements 18 während des Lasersinterns und/oder Laserschmelzens des Referenzbauteils charakterisieren. Durch Ermittlung eines oder mehrerer Unterschiede zwischen dem ersten Datensatz und dem zweiten Datensatz kann eine Beurteilung der Qualität des Bauteils 10 vorgenommen werden.

Fig. 4 zeigt ein Histogramm 20 eines Referenzbauteils (nicht gezeigt) im betrachteten Volumenelement 18, bei welchem auf der Ordinatenachse Farb- bzw. Grauwerte F und auf der Abszissenachse die entsprechende Ortskoordinate L zwischen der Bauplattform 16 und der Oberseite des Bauteils 10 aufgetragen sind. Das Histogramm 20 beschreibt somit den Soll-Helligkeits- bzw. Soll-Temperaturverlauf innerhalb des Volumenelements 18.

Fig. 5 zeigt eine Überlagerung eines Histogramms 22 eines Bauteils 10 im betrachteten Volumenelement 18 mit dem korrespondierenden Histogramm 20 des Referenzbauteils. Man erkennt verschiedene ortsabhängige Temperaturabweichungen. Die Unterschiede der ortsaufgelösten Temperaturwerte können beispielsweise mit Hilfe eines Vergleichs zwischen den Histogrammen 20 und 22, mit Hilfe einer Kreuzkorrelation des ersten und des zweiten Datensatzes des Volumenelements 18, mit Hilfe einer Autokorrelation des ersten Datensatzes und/oder des zweiten Datensatzes, mit Hilfe einer Zerlegung des ersten und/oder des zweiten Datensatzes in harmonische Komponenten und/oder mit Hilfe einer Ermittlung eines Volumenschwerpunkts des Bauteils 10 und des Referenzbauteils ermittelt werden. Übersteigen die Unterschiede einen vorgegebenen Grenzwert, wird das Bauteil 10 als unzulässig klassifiziert. Bewegen sich die Unterschiede demgegenüber innerhalb eines vorgegebenen Toleranzrahmens, entspricht das Bauteil 10 dem Referenzbauteil und damit den vorgegebenen Anforderungen.

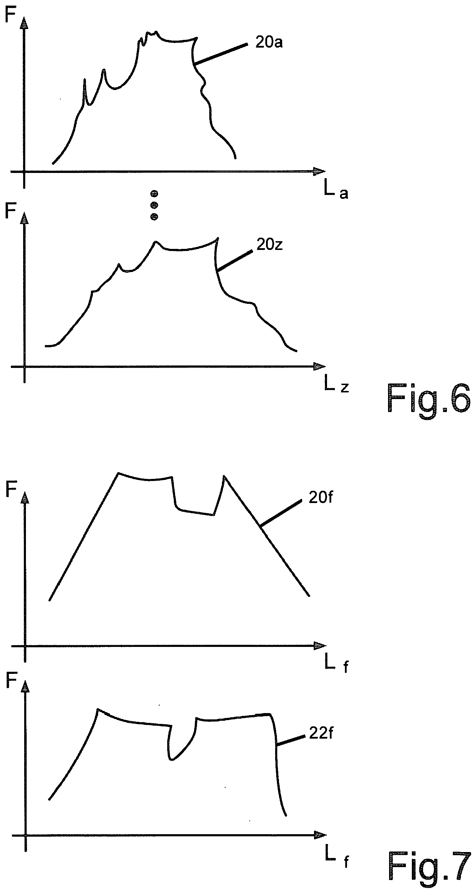

Fig. 6 zeigt eine schematisch angedeutete Schar von Histogrammen 20a bis 20z entlang entsprechender Geradenscharen La bis Lz durch das Referenzbauteil, die zur globalen Auswertung der Bauteilqualität, das heißt zur Beurteilung des gesamten Bauteils 10 dienen. Wie aus Fig. 7 deutlich wird, wird zur Beurteilung der Bauteilqualität ein Vergleich zwischen jedem der Histogramme 20a bis 20z (hier beispielhaft Histogramm 20f) des Referenzbauteils mit einem zugeordneten Histogramm 22a bis 22z (hier beispielhaft Histogramm 22f) des Bauteils 10 vorgenommen und anhand von etwaigen Unterschieden zwischen dem Bauteil 10 und dem Meister entschieden, ob das Bauteil 10 den geforderten Spezifikationen entspricht oder nicht.

Die in den Unterlagen angegebenen Parameterwerte zur Definition von Prozess- und Messbedingungen für die Charakterisierung von spezifischen Eigenschaften des Erfindungsgegenstands sind auch im Rahmen von Abweichungen - beispielsweise aufgrund von Messfehlern, Systemfehlern, Einwaagefehlern, DIN-Toleranzen und dergleichen - als vom Rahmen der Erfindung mitumfasst anzusehen.

## Patentansprüche

1. Verfahren zur Qualitätsbeurteilung eines mittels eines generativen Lasersinter- und/oder Laserschmelzverfahrens hergestellten Bauteils (10), insbesondere eines Bauteils (10) für ein Flugzeugtriebwerk, umfassend die Schritte:
- Bereitstellen eines ersten Datensatzes, welcher ortsaufgelöste Farbwerte umfasst, die jeweils die Temperatur des Bauteils (10) an einem zugeordneten Bauteilort während des Lasersinterns und/oder Laserschmelzens des Bauteils (10) charakterisieren;
- Bereitstellen eines zweiten Datensatzes, welcher mit dem ersten Datensatz korrespondierende ortsaufgelöste Farbwerte umfasst, die jeweils die Temperatur eines Referenzbauteils an einem zugeordneten Referenzbauteilort während des Lasersinterns und/oder Laserschmelzens des Referenzbauteils charakterisieren;
- Ermitteln eines Unterschieds zwischen dem ersten Datensatz und dem zweiten Datensatz; und
- Beurteilen der Qualität des Bauteils (10) anhand des Unterschieds zwischen dem ersten Datensatz und dem zweiten Datensatz.

2. Verfahren nach Anspruch 1,
**dadurch gekennzeichnet, dass**
für wenigstens ein Linienelement des Bauteils (10) und/oder für wenigstens ein Flächenelement des Bauteils (10) und/oder für wenigstens ein Volumenelement des Bauteils (10) und/oder für das gesamte Bauteil (10) durchgeführt wird.

3. Verfahren nach Anspruch 1 oder 2,
**dadurch gekennzeichnet, dass**
dieses einmal oder mehrmals während des generativen Lasersinterns und/oder Laserschmelzens des Bauteils (10) und/oder im Anschluss an das generative Lasersintern und/oder Laserschmelzen des Bauteils (10) durchgeführt wird.

4. Verfahren nach einem der Ansprüche 1 bis 3,
**dadurch gekennzeichnet, dass**
anhand des ermittelten Unterschieds wenigstens ein weiterer Parameter aus der Gruppe Pulververschleiß, Pulverzustand, Laserleistung, Gleichmäßigkeit des Pulverauftrags, Schichtstärke, Verfahrweg einer zum Lasersintern und/oder Laserschmelzen verwendeten Bauplattform, Streifenüberlapp, Belichtungsparameter, Übertragbarkeit des Lasersinter- und/oder Laserschmelzverfahrens auf einen Lasersinter- und/oder Laserschmelzanlagentyp, der vom zur Herstellung des Referenzbauteils verwendeten Lasersinter- und/oder Laserschmelzanlagentyp abweicht, Alterungserscheinungen der verwendeten Lasersinter- und/oder Laserschmelzanlage und Maschinendrift der verwendeten Lasersinter- und/oder Laserschmelzanlage bestimmt wird.

5. Verfahren nach einem der Ansprüche 1 bis 4,
**dadurch gekennzeichnet, dass**
der erste Datensatz und/oder der zweite Datensatz mindestens 1 Millionen und vorzugsweise mindestens 2 Millionen ortsaufgelöste Farbwerte umfasst.

6. Verfahren nach einem der Ansprüche 1 bis 5,
**dadurch gekennzeichnet, dass**
der erste Datensatz und/oder der zweite Datensatz aus Messwerten erstellt werden, die mit Hilfe wenigstens eines hochauflösenden Detektors und/oder eines optischen Thermographieverfahrens ermittelt werden.

7. Verfahren nach einem der Ansprüche 1 bis 6,
**dadurch gekennzeichnet, dass**
als Farbwerte für den ersten Datensatz und/oder für den zweiten Datensatz Graustufen verwendet werden.

8. Verfahren nach einem der Ansprüche 1 bis 7,
**dadurch gekennzeichnet, dass**
der Unterschied zwischen dem ersten Datensatz und dem zweiten Datensatz mit Hilfe:
- eines Vergleichs zwischen wenigstens einem Histogramm (22) des Bauteils (20) und wenigstens einem korrespondierenden Histogramm (20) des Referenzbauteils; und/oder
- einer Kreuzkorrelation des ersten und des zweiten Datensatzes; und/oder
- einer Autokorrelation des ersten Datensatzes und/oder des zweiten Datensatzes ermittelt wird.

9. Verfahren nach einem der Ansprüche 1 bis 8,
**dadurch gekennzeichnet, dass**
der Unterschied zwischen dem ersten Datensatz und dem zweiten Datensatz mit Hilfe:
- einer Zerlegung des ersten und/oder des zweiten Datensatzes in harmonische Komponenten; und/oder
- einer Ermittlung wenigstens eines Linienschwerpunkts und/oder wenigstens eines Flächenschwerpunkts und/oder eines Volumenschwerpunkts des Bauteils (10) und/oder des Referenzbauteils
ermittelt wird.

10. Verfahren nach einem der Ansprüche 1 bis 9,
**dadurch gekennzeichnet, dass**
auf einen zu geringen Energieeintrag im Lasersinter- und/oder Laserschmelzprozess und/oder auf eine abfallende Laserleistung und/oder auf eine Verschmutzung eines optischen Systems der Lasersinter- und/oder Laserschmelzanlage geschlossen wird, wenn wenigstens ein Farbwert an einem Bauteilort des Bauteils (10) dunkler als ein Farbwert an einem korrespondierenden Referenzbauteilort des Referenzbauteils ist.

11. Verfahren nach einem der Ansprüche 1 bis 10,
**dadurch gekennzeichnet, dass**
auf einen zu hohen Energieeintrag im Lasersinter- und/oder Laserschmelzprozess und/oder auf eine zu große Laserleistung und/oder auf eine schlechte Wärmeleitung im versinterten Werkstoffpulver geschlossen wird, wenn wenigstens ein Farbwert an einem Bauteilort des Bauteils (10) heller als ein Farbwert an einem korrespondierenden Referenzbauteilort des Referenzbauteils ist.

12. Verfahren nach einem der Ansprüche 1 bis 11,
**dadurch gekennzeichnet, dass**
auf einen falschen Werkstoff und/oder auf einen verunreinigten Werkstoff und/oder auf einen gealterten Werkstoff geschlossen wird, wenn wenigstens ein Farbwert an einem Bauteilort des Bauteils (10) heller als ein Farbwert an einem korrespondierenden Referenzbauteilort des Referenzbauteils ist.

13. Verfahren nach einem der Ansprüche 1 bis 12,
**dadurch gekennzeichnet, dass**
das Bauteil (10) als zulässig klassifiziert wird, wenn der ermittelte Unterschied innerhalb vorgegebener Grenzen liegt, oder dass das Bauteil (10) als unzulässig klassifiziert wird, wenn der ermittelte Unterschied die vorgegebenen Grenzen überschreitet.

14. Vorrichtung zur Durchführung eines Verfahrens nach einem der Ansprüche 1 bis 13, umfassend:
- eine generative Lasersinter- und/oder Laserschmelzanlage zum Herstellen eines Bauteils (10), insbesondere eines Bauteils (10) für ein Flugzeugtriebwerk;
- eine Detektionseinrichtung, welche ausgebildet ist, ortsaufgelöste Farbwerte zu erfassen, die jeweils die Temperatur des Bauteils (10) an einem zugeordneten Bauteilort während des Lasersinterns und/oder Laserschmelzens des Bauteils (10) charakterisieren; und
- eine Recheneinrichtung, mittels welcher:
- ein erster Datensatz aus den ortsaufgelösten Farbwerten erzeugbar ist;
- ein zweiter Datensatz bereitstellbar ist, wobei der zweite Datensatz mit dem ersten Datensatz korrespondierende ortsaufgelöste Farbwerte umfasst, die jeweils die Temperatur eines Referenzbauteils an einem zugeordneten Referenzbauteilort während des Lasersinterns und/oder Laserschmelzens des Referenzbauteils charakterisieren;
- ein Unterschied zwischen dem ersten Datensatz und dem zweiten Datensatz ermittelbar ist; und
- zumindest die Qualität des Bauteils (10) anhand des Unterschieds zwischen dem ersten Datensatz und dem zweiten Datensatz beurteilbar ist.

15. Vorrichtung nach Anspruch 14,
**dadurch gekennzeichnet, dass**
die Detektionseinrichtung wenigstens einen hochauflösenden Detektor und/oder wenigstens einen IR-sensitiven Detektor, insbesondere eine CMOS- und/oder sCMOS- und/oder CCD-Kamera zum Erfassen von IR-Strahlung umfasst.

## Claims

1. Method for assessing the quality of a component (10) produced by means of a generative laser sintering and/or laser melting process, in particular a component (10) for an aircraft engine, comprising the following steps:
- providing a first data set comprising spatially resolved color values, each of which characterizes the temperature of the component (10) at an associated component location during the laser sintering and/or laser melting of the component (10);
- providing a second data set comprising spatially resolved color values that correspond to the first data set and each of which characterizes the temperature of a reference component at an associated reference component location during the laser sintering and/or laser melting of the reference component;
- determining a difference between the first data set and the second data set; and
- assessing the quality of the component (10) on the basis of the difference between the first data set and the second data set.

2. Method according to claim 1, **characterized in that** is carried out for at least one line element of the component (10) and/or for at least one surface element of the component (10) and/or for at least one volume element of the component (10) and/or for the entire component (10).

3. Method according to either claim 1 or claim 2, **characterized in that** said method is carried out once or a plurality of times during the generative laser sintering and/or laser melting of the component (10) and/or following the generative laser sintering and/or laser melting of the component (10).

4. Method according to any of claims 1 to 3, **characterized in that** at least one further parameter from the group comprising powder abrasion, powder state, laser power, uniformity of the powder coating, layer thickness, travel path of a construction platform used for laser sintering and/or laser melting, strip overlap, exposure parameter, transferability of the laser sintering and/or laser melting process to a type of laser sintering and/or laser melting installation that is different form the type of laser sintering and/or laser melting installation used to produce the reference component, signs of aging of the laser sintering and/or laser melting installation used, and mechanical drift of the laser sintering and/or laser melting installation used, is ascertained on the basis of the determined difference.

5. Method according to any of claims 1 to 4, **characterized in that** the first data set and/or the second data set comprise at least one million, and preferably at least two million, spatially resolved color values.

6. Method according to any of claims 1 to 5, **characterized in that** the first data set and/or the second data set are established from measurement values that are determined by means of at least one high-resolution detector and/or an optical thermography method.

7. Method according to any of claims 1 to 6, **characterized in that** shades of gray are used as color values for the first data set and/or for the second data set.

8. Method according to any of claims 1 to 7, **characterized in that** the difference between the first data set and the second data set is determined by means of:
- comparing at least one histogram (22) of the component (20) with at least one corresponding histogram (20) of the reference component; and/or
- cross-correlating the first and the second data set; and/or
- autocorrelating the first data set and/or the second data set.

9. Method according to any of claims 1 to 8, **characterized in that** the difference between the first data set and the second data set is determined by means of:
- breaking down the first and/or the second data set into harmonics; and/or
- determining at least one centroid of a line, and/or at least one centroid of a surface, and/or a centroid of a volume of the component (10) and/or of the reference component.

10. Method according to any of claims 1 to 9, **characterized in that**, if at least one color value at a component location of the component (10) is darker than a color value at a corresponding reference component location of the reference component, it can be deduced that the energy input into the laser sintering and/or laser melting process is too low, and/or that the laser power is decreasing, and/or that an optical system of the laser sintering and/or laser melting installation is contaminated.

11. Method according to any of claims 1 to 10, **characterized in that**, if at least one color value at a component location of the component (10) is lighter than a color value at a corresponding reference component location of the reference component, it can be deduced that the energy input into the laser sintering and/or laser melting process is too high, and/or that the laser power is too high, and/or that heat conduction in the sintered material powder is poor.

12. Method according to any of claims 1 to 11, **characterized in that**, if at least one color value at a component location of the component (10) is lighter than a color value at a corresponding reference component location of the reference component, it can be deduced that the material is incorrect, and/or that the material is dirty, and/or that the material is old.

13. Method according to any of claims 1 to 12, **characterized in that** the component (10) is classed as acceptable if the determined difference is within specified limits, or **in that** the component (10) is classed as unacceptable if the determined difference exceeds the specified limits.

14. Apparatus for carrying out a method according to any of claims 1 to 13, said apparatus comprising:
- a generative laser sintering and/or laser melting installation for producing a component (10), in particular a component (10) for an aircraft engine;
- a detection device designed for capturing spatially resolved color values, each of which characterizes the temperature of the component (10) at an associated component location during the laser sintering and/or laser melting of the component (10); and
- an arithmetic unit, by means of which:
- a first data set can be generated from the spatially resolved color values;
- a second data set can be provided, the second data set comprising spatially resolved color values that correspond to the first data set and each of which characterizes the temperature of a reference component at an associated reference component location during the laser sintering and/or laser melting of the reference component;
- a difference between the first data set and the second data set can be determined; and
- at least the quality of the component (10) can be assessed on the basis of the difference between the first data set and the second data set.

15. Apparatus according to claim 14, **characterized in that** the detection device comprises at least one high-resolution detector and/or at least one IR-sensitive detector, in particular a CMOS and/or sCMOS and/or CCD camera for capturing IR radiation.

## Revendications

1. Procédé pour évaluer la qualité d'un composant (10) fabriqué au moyen d'un procédé additif de frittage au laser et/ou de fusion au laser, en particulier d'un composant (10) pour un moteur d'aéronef, comportant les étapes consistant à :
- produire un premier ensemble de données, lequel comporte des valeurs chromatiques à résolution spatiale qui caractérisent respectivement la température du composant (10) en un endroit associé du composant pendant le frittage au laser et/ou la fusion au laser du composant (10) ;
- produire un deuxième ensemble de données, lequel comporte des valeurs chromatiques à résolution spatiale correspondant au premier ensemble de données qui caractérisent respectivement la température d'un composant de référence en un endroit associé du composant de référence pendant le frittage au laser et/ou la fusion au laser du composant de référence ;
- déterminer une différence entre le premier ensemble de données et le deuxième ensemble de données ; et
- évaluer la qualité du composant (10) sur la base de la différence entre le premier ensemble de données et le deuxième ensemble de données.

2. Procédé selon la revendication 1,
**caractérisé en ce que**
celui-ci est mis en oeuvre pour au moins un élément linéaire du composant (10) et/ou pour au moins un élément de surface du composant (10) et/ou pour au moins un élément de volume du composant (10) et/ou pour tout le composant (10).

3. Procédé selon la revendication 1 ou 2,
**caractérisé en ce que**
celui-ci est mis en oeuvre une fois ou plusieurs fois pendant le frittage au laser additif et/ou la fusion au laser additive et/ou suite au frittage au laser additif et/ou à la fusion au laser additive du composant (10).

4. Procédé selon l'une quelconque des revendications 1 à 3,
**caractérisé en ce que**,
sur la base de la différence déterminée, au moins un autre paramètre dans le groupe comprenant l'usure de la poudre, l'état de la poudre, la puissance du laser, l'uniformité de l'application de la poudre, l'épaisseur de couche, le déplacement d'un plateau utilisé pour le frittage au laser et/ou la fusion au laser, le recouvrement de bandes, un paramètre d'éclairage, la transférabilité du procédé de frittage au laser et/ou de fusion au laser à un type d'installation de frittage au laser et/ou de fusion au laser qui est différent du type d'installation de frittage au laser et/ou de fusion utilisé pour la fabrication du composant de référence, des phénomènes de vieillissement de l'installation de frittage au laser et/ou de fusion au laser utilisée et la dérive de machine de l'installation de frittage au laser et/ou de fusion au laser utilisée est déterminé.

5. Procédé selon l'une quelconque des revendications 1 à 4,
**caractérisé en ce que**
le premier ensemble de données et/ou le deuxième ensemble de données comportent au moins 1 million et de préférence au moins 2 millions de valeurs chromatiques à résolution spatiale.

6. Procédé selon l'une quelconque des revendications 1 à 5,
**caractérisé en ce que**
le premier ensemble de données et/ou le deuxième ensemble de données sont produits à partir de valeurs de mesure qui sont déterminées à l'aide d'au moins un détecteur à haute résolution et/ou d'un procédé de thermographie optique.

7. Procédé selon l'une quelconque des revendications 1 à 6,
**caractérisé en ce que**
des nuances de gris sont utilisées en tant que valeurs chromatiques pour le premier ensemble de données et/ou pour le deuxième ensemble de données.

8. Procédé selon l'une quelconque des revendications 1 à 7,
**caractérisé en ce que**
la différence entre le premier ensemble de données et le deuxième ensemble de données est déterminée à l'aide de :
- une comparaison entre au moins un histogramme (22) du composant (10) et au moins un histogramme correspondant (20) du composant de référence ; et/ou
- une corrélation croisée du premier et du deuxième ensemble de données ; et/ou
- une autocorrélation du premier ensemble de données et/ou du deuxième ensemble de données.

9. Procédé selon l'une quelconque des revendications 1 à 8,
**caractérisé en ce que**
la différence entre le premier ensemble de données et le deuxième ensemble de données est déterminée à l'aide de :
- une décomposition du premier et/ou du deuxième ensemble de données en composantes harmoniques ; et/ou
- une détermination d'au moins un barycentre de ligne et/ou d'au moins un barycentre de surface et/ou d'un barycentre de volume du composant (10) et/ou du composant de référence.

10. Procédé selon l'une quelconque des revendications 1 à 9,
**caractérisé en ce**
**qu'**on conclut à un apport d'énergie trop faible dans le processus de frittage au laser et/ou de fusion au laser et/ou à une puissance de laser décroissante et/ou à un encrassement d'un système optique de l'installation de frittage au laser et/ou de fusion au laser lorsqu'au moins une valeur chromatique en un endroit du composant (10) est plus sombre qu'une valeur chromatique en un endroit correspondant du composant de référence.

11. Procédé selon l'une quelconque des revendications 1 à 10,
**caractérisé en ce**
**qu'**on conclut à un apport d'énergie trop élevé dans le processus de frittage au laser et/ou de fusion au laser et/ou à une puissance de laser trop grande et/ou à une mauvaise conduction thermique dans la poudre de matière frittée lorsqu'au moins une valeur chromatique en un endroit du composant (10) est plus claire qu'une valeur chromatique en un endroit correspondant du composant de référence.

12. Procédé selon l'une quelconque des revendications 1 à 11,
**caractérisé en ce**
**qu'**on conclut à une mauvaise matière et/ou à une matière contaminée et/ou à une matière vieillie lorsqu'au moins une valeur chromatique en un endroit du composant (10) est plus claire qu'une valeur chromatique en un endroit correspondant du composant de référence.

13. Procédé selon l'une quelconque des revendications 1 à 12,
caractérisé en ce
le composant (10) est classifié comme étant admissible lorsque la différence déterminée se situe dans des limites prédéfinies, ou en ce que le composant (10) est classifié comme étant inadmissible lorsque la différence déterminée dépasse les limites prédéfinies.

14. Dispositif permettant de mettre en oeuvre un procédé selon l'une quelconque des revendications 1 à 13, comportant :
- une installation de frittage au laser additif et/ou de fusion au laser additive permettant de fabriquer un composant (10), en particulier un composant (10) pour un moteur d'aéronef ;
- un dispositif de détection, lequel est conçu pour détecter des valeurs chromatiques à résolution spatiale qui caractérisent respectivement la température du composant (10) en un endroit associé du composant pendant le frittage au laser et/ou la fusion au laser du composant (10) ; et
- un dispositif de calcul au moyen duquel :
∘ un premier ensemble de données peut être généré à partir des valeurs chromatiques à résolution spatiale ;
∘ un deuxième ensemble de données peut être produit, le deuxième ensemble de données comportant des valeurs chromatiques à résolution spatiale correspondant au premier ensemble de données qui caractérisent respectivement la température d'un composant de référence en un endroit associé du composant de référence pendant le frittage au laser et/ou la fusion au laser du composant de référence ;
∘ une différence entre le premier ensemble de données et le deuxième ensemble de données peut être déterminée ; et
∘ au moins la qualité du composant (10) peut être évaluée sur la base de la différence entre le premier ensemble de données et le deuxième ensemble de données.

15. Dispositif selon la revendication 14,
caractérisé en ce
le dispositif de détection comporte au moins un détecteur à haute résolution et/ou au moins un détecteur sensible aux infrarouges, en particulier une caméra CMOS, et/ou sCMOS et/ou CCD, servant à détecter un rayonnement infrarouge.
